# FASCICULE DE BREVET EUROPEEN

(11) **EP 2 540 572 B1**
(45) Date de publication et mention de la délivrance du brevet: **19.08.2015**
(21) Numéro de dépôt: 12173607.8
(22) Date de dépôt: 26.06.2012
(51) Int. Cl.: B60R 7/06, B60R 21/045

(54) **Dispositif de rangement comprenant une partie avant et une partie arrière séparables sous l'effet d'une force**
Vorrichtung zum Verstauen mit einem durch Krafteinwirkung trennbaren vorderen und hinteren Teil
Storage device including a front portion and a rear portion separable when exposed to a force

(30) Priorité: 27.06.2011 FR 1101991
(43) Date de publication de la demande: 02.01.2013
(73) Titulaire: Faurecia Intérieur Industrie, 92000 Nanterre (FR)
(72) Inventeur: Monnier, Gwenael, 78124 Mareil sur Mauldre (FR)
(74) Mandataire: Jacobson, Claude

(56) Documents cités:
- DE-B3-102006 051 948
- JP-A- 2003 104 130
- US-A1- 2004 124 623

## Description

La présente invention concerne un dispositif de rangement pour véhicule comprenant au moins une partie avant et une partie arrière définissant entre elles un volume de rangement.

La présente invention concerne également une planche de bord de véhicule comprenant un tel dispositif de rangement.

L'invention s'applique plus particulièrement aux dispositifs de rangement pour véhicule automobile du type boîte à gant prévue dans la planche de bord d'un véhicule automobile.

Un tel dispositif de rangement est agencé dans la planche de bord de sorte à rendre le volume de rangement accessible par la façade de la planche de bord, tandis que le fond du dispositif de rangement s'étend en regard d'éléments structurels du véhicule masqués par la planche de bord, tels qu'une partie du groupe de chauffage, ventilation et climatisation ou bien le tablier qui sépare l'habitacle intérieur du véhicule et le compartiment moteur. Dans le cas d'une boîte à gant, le dispositif de rangement est par exemple disposé en regard des genoux du passager avant du véhicule automobile.

En cas de choc frontal contre le véhicule automobile, ces éléments structurels sont susceptibles de se déplacer vers l'arrière du véhicule automobile, c'est-à-dire vers l'habitacle. Ce déplacement entraîne une intrusion de la façade du dispositif de rangement dans l'habitacle du véhicule automobile, sous l'effet de la poussée des éléments structurels disposés en regard du fond du dispositif, cette intrusion pouvant occasionner des blessures au passager avant du véhicule en heurtant ses genoux.

L'espace s'étendant entre le fond du dispositif de rangement et les éléments structurels est insuffisant pour prévoir des moyens d'absorption de l'énergie due au choc permettant de limiter les risques de blessures du passager du véhicule automobile. Cet espace entre le fond du dispositif et les éléments structurels est d'autant plus faible que l'on cherche toujours à agrandir le volume de rangement disponible.

Il a donc été prévu que le dispositif de rangement soit lui-même apte à absorber l'énergie due au choc ou qu'il soit agencé pour limiter son intrusion dans l'habitacle en cas de choc. A cet effet, le dispositif de rangement est par exemple agencé pour se déformer en s'écrasant en cas de choc entraînant l'application d'une force sur le fond du dispositif par les éléments structurels s'étendant en regard de ce fond. Le document FR-2 924 078 décrit par exemple un tel dispositif de rangement déformable. L'écrasement du dispositif de rangement a pour effet d'absorber de l'énergie et de limiter le déplacement du dispositif de rangement vers l'habitacle.

Cependant, la réalisation d'un tel dispositif de rangement déformable en cas de choc est complexe et coûteuse. De plus, la déformation du dispositif peut n'être pas suffisante pour assurer une absorption d'énergie satisfaisante et limiter de façon optimale les risques de blessures de l'occupant du véhicule. Enfin, il arrive que la déformation ne soit pas immédiate et assez rapide en cas de choc violant, le dispositif de rangement formant dans ce cas un point dur au moment du choc avec l'occupant avant de se déformer ensuite en absorbant de l'énergie.

Le document DE 10 2006 051948 B3 décrit un dispositif de rangement du type précité agencé pour s'écraser en cas de choc.

L'un des buts de l'invention est de pallier les inconvénients ci-dessus en proposant un dispositif de rangement simple à réaliser et permettant de limiter les risques d'intrusion dans l'habitacle du véhicule, et donc de blessures du passager, en cas de choc de façon satisfaisante.

A cet effet, l'invention concerne un dispositif de rangement du type précité, dans lequel la partie avant et la partie arrière sont fixées l'une à l'autre par un dispositif de fixation séparable, ledit dispositif de fixation étant agencé pour permettre la séparation de ladite partie avant de ladite partie arrière sous l'effet d'une force externe supérieure à un seuil prédéterminé, de sorte que la partie avant ou la partie arrière est désolidarisée de l'autre partie et pénètre dans le volume de rangement sous l'effet de ladite force externe.

L'absorption d'énergie et la limitation de l'intrusion dans l'habitacle du véhicule se fait par le déplacement d'une partie du dispositif par rapport à l'autre, après la désolidarisation de ces parties, et la pénétration de cette partie dans le volume de rangement. Le volume de rangement offre en effet un espace idéal pour limiter le déplacement du dispositif de rangement vers l'habitacle du véhicule et absorber les effets du choc entre le fond du dispositif de rangement et les éléments structurels s'étendant en regard et/ou entre les genoux d'un passager du véhicule et la façade du dispositif en cas de choc contre le véhicule automobile. Cette absorption se fait sans déformation de l'ensemble du dispositif de rangement.

Selon d'autres caractéristiques du dispositif de rangement :
- le dispositif de fixation séparable est agencé pour permettre la séparation de la partie avant de la partie arrière lorsque la force externe est appliquée selon une direction allant de la partie avant vers le volume de rangement et pour maintenir la partie avant solidaire de la partie arrière lorsque la force externe est appliquée selon une direction allant du volume de rangement vers la partie avant .
- la partie arrière comprend deux parois latérales s'étendant de part et d'autre du volume de rangement, lesdites parois latérales portant le dispositif de fixation séparable de la partie avant sur la partie arrière ;
- le dispositif de fixation comprend un élément d'encliquetage saillant de chaque paroi latérale dans le volume de rangement et un rebord s'étendant à partir de l'extrémité de chaque paroi latérale vers la partie avant, l'élément d'encliquetage et le rebord d'une paroi latérale étant agencés pour retenir entre eux un des bords latéraux de la partie avant ;
- le dispositif de fixation est formé par au moins un organe frangible ;
- le dispositif de fixation comprend une charnière film reliant la ligne de fond de la partie arrière à la partie avant, ladite charnière étant agencée pour se rompre sous l'effet de la force externe supérieure à un seuil prédéterminé ;
- le dispositif de fixation est formé par au moins un organe d'engagement par friction ;
- la partie avant est formée par une paroi sensiblement plane ;
- la partie avant est formée par une pluralité de parois définissant une partie du volume de rangement entre elles, la partie arrière définissant une autre partie du volume de rangement.

L'invention concerne également une planche de bord de véhicule, comprenant un dispositif de rangement tel que décrit ci-dessus, ladite planche de bord comprenant une façade et une partie interne disposée en regard d'éléments structurels du véhicule, le dispositif de rangement étant agencé pour que la partie avant s'étende du côté de la façade et la partie arrière s'étende du côté de la partie interne.

D'autres aspects et avantages de l'invention apparaîtront à la lecture de la description qui suit, donnée à titre d'exemple et faite en référence aux dessins annexés, dans lesquels :
- la Fig. 1 est une représentation schématique de face de l'habitacle d'un véhicule automobile, montrant la façade d'un dispositif de rangement ;
- la Fig. 2 est une représentation schématique en coupe selon l'axe II-II de la Fig. 1, selon un premier mode de réalisation du dispositif de rangement,
- la Fig. 3 est une représentation schématique en coupe selon l'axe II-II de la Fig. 1, selon un deuxième mode de réalisation du dispositif de rangement,
- la Fig. 4 est une représentation partielle d'un coin d'un dispositif de rangement selon un autre mode de réalisation de l'invention.

Dans la description, les termes « avant » et « arrière » sont définis par rapport à la direction avant-arrrière usuelle d'un véhicule automobile monté. Le terme « latéral » est défini selon la largeur du véhicule automobile.

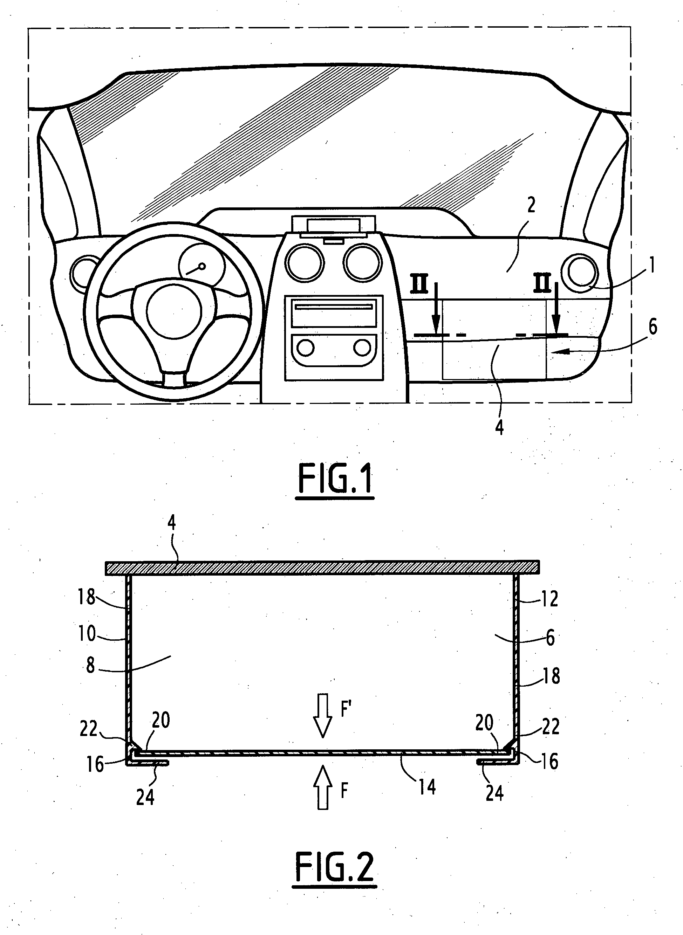

En référence à la Fig. 1, on décrit une planche de bord de véhicule automobile 1 comprenant une façade 2, tournée vers l'habitacle du véhicule automobile, intégrant la paroi de façade 4 d'un dispositif de rangement 6. Le dispositif de rangement 6 est par exemple une boîte à gant s'étendant du côté du passager avant du véhicule automobile, en regard des genoux de celui-ci. Par intégrée, on entend que la paroi de façade 4 s'étend dans la continuité de la façade 2 de la planche de bord.

La paroi de façade 4 masque un volume de rangement 8 s'étendant à l'intérieur de la planche de bord 1. Le volume de rangement 8 est défini par un corps 10 du dispositif de rangement 6 et est destiné à recevoir des objets à stocker dans le véhicule automobile. De façon connue, le volume de rangement 8 est accessible depuis l'habitacle du véhicule automobile soit en prévoyant une paroi de façade 4 mobile par rapport au corps 10 du dispositif 6, soit en rendant tout le corps 10 mobile par rapport à la planche de bord 1.

Le corps 10 du dispositif de rangement comprend une partie arrière 12, à laquelle appartient la paroi de façade 4, et une partie avant 14, fixées l'une à l'autre par un dispositif de fixation séparable 16. Plus particulièrement, la partie arrière 12 et la partie avant 14 sont réalisées en deux pièces distinctes l'une de l'autre. La partie arrière 12 et la partie avant 14 définissent entre elles le volume de rangement 8 lorsqu'elles sont fixées l'une à l'autre. Le volume de rangement 8 peut avoir toutes les formes envisageables pour ce type d'application en adaptant la forme de la partie arrière 12 et de la partie avant 14. La partie avant 14 définit le fond du dispositif de rangement 6 et est par exemple disposée en regard d'éléments structurels du véhicule automobile, masqués par la planche de bord 1.

A titre d'exemple, selon le mode de réalisation représenté sur la Fig. 2, le volume de rangement 8 présente une forme sensiblement parallélépipédique, la partie avant 14 formant une face de ce parallélépipède en étant réalisée sous la forme d'une paroi sensiblement plane. Le reste du parallélépipède est formé par la partie arrière 12, qui comprend notamment deux parois latérales 18 formant deux côtés du parallélépipède, s'étendant de part et d'autre du volume de rangement 8, et qui relient la paroi de façade 4 à la paroi sensiblement plan formée par la partie avant 14.

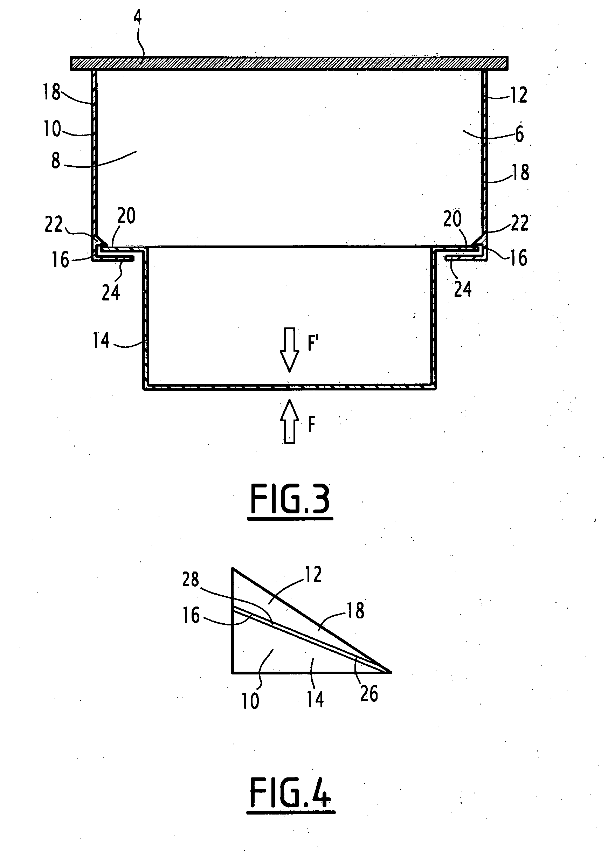

Selon un autre exemple représenté sur la Fig. 3, le volume de rangement 8 présente une forme différente du fait de la géométrie particulière de la partie avant 14, la partie arrière 12 étant sensiblement identique à celle décrite en référence à la Fig. 2. Selon ce mode de réalisation, le volume de rangement 8 est agrandi, car la partie avant 14 est formée d'une pluralité de parois 20 qui définissent un volume supplémentaire de forme sensiblement parallélépipédique, s'ajoutant au volume de forme sensiblement parallélépipédique défini par les parois de la partie arrière 12.

Les formes des parties avant 14 et arrière 12 sont adaptées en fonction de l'espace disponible entre la façade 4 et les éléments structurels et de la position des éléments structurels par rapport à la partie avant 14 du dispositif de rangement 6.

Les formes décrites ci-dessus ne sont nullement limitatives et n'ont été représentées qu'à titre d'exemple.

Dans les modes de réalisation représentés, la partie avant 14 est fixée à la partie arrière par ses bords latéraux 20, qui coopèrent avec le dispositif de fixation séparable 16, prévu sur les parois latérales de la partie arrière 12.

Selon le mode de réalisation représenté sur les Fig. 2 et 3, le dispositif de fixation 16 est formé par un élément d'encliquetage 22 prévu sur chaque paroi latérale 18 et un rebord 24 s'étendant à partir de l'extrémité de chaque paroi latérale 18 vers la partie avant 14 en regard de l'élément d'encliquetage 22. Chaque bord latéral 20 de la partie avant 14 est retenu entre un élément d'encliquetage 22 et un rebord 24 s'étendant en regard, comme représenté sur les Fig. 2 et 3.

L'élément d'encliquetage 22 est formé par une patte d'encliquetage saillant d'une paroi latérale 18 dans le volume de rangement 8, agencée pour permettre le passage du bord latéral 20 en force vers le rebord 24, pour fixer la partie avant 14 entre l'élément d'encliquetage 22 et ledit rebord 24, et pour permettre le dégagement du bord latéral 20 lorsqu'une certaine force est appliquée contre la partie avant 14, comme cela sera décrit ultérieurement. Le rebord 24 présente une rigidité suffisante pour retenir la partie avant 14 en appui, même lorsque le volume de rangement 8 est rempli avec des objets à stocker.

Ainsi, le dispositif de fixation 16 est agencé pour permettre la séparation de la partie avant 14 de la partie arrière 12 lorsqu'une force externe supérieure à un seuil prédéterminé est appliquée sur la partie avant 12 selon une direction allant de l'avant vers l'arrière, comme représenté par la flèche F des Fig. 2 et 3 et pour maintenir la partie avant solidaire de la partie arrière lorsque la force externe est appliquée selon une direction allant de l'arrière vers l'avant comme représenté par la flèche F' des Fig. 2 et 3.

Le dispositif de rangement 6 est donc agencé pour que la partie avant 14 se sépare de la partie arrière 12 et pénètre dans le volume de rangement 8 sous l'effet d'une force externe supérieure à un seuil prédéterminé appliqué de l'avant vers l'arrière. Une telle force est appliquée lorsque les éléments structurels du véhicule automobile disposés en regard de la partie avant 14 sont poussés contre la partie avant 14 sous l'effet d'un choc frontal contre le véhicule par exemple. Une telle force peut également être appliquée lorsque les genoux d'un occupant heurtent avec violence le dispositif de rangement 6 de sorte que la partie avant 14 vient heurter les éléments structurels disposés en regard. Ainsi, en cas de choc violent contre le dispositif de rangement 6, on assure une limitation de l'intrusion des éléments structurels ou du dispositif de rangement dans l'habitacle automobile, cette intrusion étant absorbée par la pénétration de la partie avant 14 dans le volume de rangement. On assure également que les genoux de l'occupant du véhicule automobile ne heurte pas les éléments structurels en regard du dispositif de rangement 6 même en cas de choc violent contre le dispositif de rangement 6. Selon un mode de réalisation, le seuil prédéterminé au-delà duquel la partie avant 14 se sépare de la partie arrière 12 correspond à une force sensiblement comprise entre 250 N et 750 N et est adapté en fonction du niveau d'effort transmis aux genoux de l'occupant du véhicule. Ce seuil peut être réglé en choisissant les caractéristiques des pattes d'encliquetage formant les éléments d'encliquetage 22.

On notera cependant que le dispositif de rangement est agencé pour que la partie avant 14 ne se sépare pas de la partie arrière 12 lorsque la force est appliquée selon la direction allant de l'arrière vers l'avant. On assure ainsi que le dispositif de rangement 6 présente une rigidité et une résistance suffisante pour soutenir les objets disposés dans le volume de rangement 8.

Le dispositif de rangement 6 décrit ci-dessus est particulièrement simple à réaliser et à monter dans le véhicule automobile. La fixation de la partie avant 14 sur la partie arrière 12 se fait simplement en introduisant la partie avant 14 entre les parois latérales 18 par le volume de rangement 8 et en poussant jusqu'à ce que les bords latéraux 20 de la partie avant 14 coopèrent avec les éléments d'encliquetage 22 et soient en appui contre les rebords 24 de la partie avant. Le montage du dispositif de rangement 6 est donc particulièrement simple et consiste seulement en l'assemblage par encliquetage de la partie avant sur la partie arrière. En outre, en cas de choc, la partie avant 14 se sépare simplement de la partie arrière 12 sans destruction du dispositif de rangement 6. Ainsi, le dispositif de rangement n'a pas nécessairement à être remplacé après le choc. La partie avant 14 peut éventuellement être déformée contre les éléments structurels sous l'effet du choc, auquel cas seule une partie du dispositif de rangement 6 doit être remplacée après le choc. On notera qu'avec les éléments d'encliquetage 22, la séparation entre la partie avant 14 et la partie arrière 12 en cas de choc est réalisée de façon fiable, sans risque que cette séparation ne survienne pas comme cela pourrait être le cas avec un dispositif de rangement réalisé d'une seule pièce avec des parties fragilisées par exemple. En outre, le déclenchement de cette séparation se fait immédiatement et sans retard dès que le choc survient, ce qui limite les risques de blessure de l'occupant du véhicule.

Le dispositif de fixation séparable 16 n'est pas limité aux éléments d'encliquetage 22 et aux rebords 24 décrits ci-dessus. Ainsi, comme représenté sur la Fig. 4, le dispositif de fixation 16 comprend également une charnière film 26 reliant la ligne de fond 28 de la partie arrière 12 à la partie avant 14. Cette charnière forme un organe frangible, c'est-à-dire conçu pour se rompre sous l'effet de la force externe supérieure à un seuil prédéterminé. D'autres types d'organes frangibles peuvent également être prévus, tels que des vis agencées pour se rompre sous l'effet d'une force supérieure à un seuil prédéterminé. Selon un mode de réalisation, les éléments d'encliquetage 22 sont réalisés de sorte à être frangibles dans le sens allant de l'avant vers l'arrière afin d'accélérer encore la séparation des parties du dispositif de rangement lors d'un choc.

Le dispositif de fixation séparable 16 peut être toutefois réalisé autrement que par des organes d'encliquetage ou des organes frangibles, par exemple par des organes d'engagement par friction. On notera cependant que lorsque le dispositif de fixation est réalisé par des organes d'encliquetage, le montage est simplifié et la séparation en cas de choc garantie.

Dans le dispositif de rangement 8 décrit ci-dessus, la partie avant 14 est agencée pour se séparer de la partie arrière 12 et pour pénétrer dans le volume de rangement 8 sous l'effet d'une force supérieure à un seuil prédéterminé. Cependant, il est entendu que le dispositif de rangement peut également être agencé pour que ce soit la partie arrière 12 qui se sépare de la partie avant 14 et qui pénètre dans le volume de rangement 8, par exemple afin de protéger les genoux d'un occupant du véhicule venant heurter le dispositif de rangement 6.

Le dispositif de rangement 6 a été décrit en relation avec un dispositif de rangement prévu dans une planche de bord de véhicule automobile. Il est cependant entendu que ce dispositif de rangement peut être adapté pour d'autres types de véhicules.

## Revendications

1. Dispositif de rangement (6) de véhicule comprenant au moins une partie avant (14) et une partie arrière (12) définissant entre elles un volume de rangement (8),
la partie avant (14) et la partie arrière (12) étant fixées l'une à l'autre par un dispositif de fixation séparable (16), ledit dispositif de fixation (16) étant agencé pour permettre la séparation de ladite partie avant (14) de ladite partie arrière (12) sous l'effet d'une force externe supérieure à un seuil prédéterminé, de sorte que la partie avant (14) ou la partie arrière (12) est désolidarisée de l'autre partie et pénètre dans le volume de rangement (8) sous l'effet de ladite force externe, **caractérisé en ce que** deux parois latérales (18) s'étendent de.part et d'autre du volume de rangement (8), et **en ce que** la partie avant (14) ou la partie arrière (12) pénètre dans le volume de rangement entre les parois latérales (18) sous l'effet de ladite force externe sans destruction du dispositif de rangement (6).

2. Dispositif de rangement selon la revendication 1, **caractérisé en ce que** le dispositif de fixation séparable (16) est agencé pour permettre la séparation de la partie avant (14) de la partie arrière (12) lorsque la force externe est appliquée selon une direction allant de la partie avant (14) vers le volume de rangement (8) et pour maintenir la partie avant (14) solidaire de la partie arrière (12) lorsque la force externe est appliquée selon une direction allant du volume de rangement (8) vers la partie avant (14).

3. Dispositif de rangement selon la revendication 1 ou 2, **caractérisé en ce que** la partie arrière (12) comprend deux parois latérales (18) s'étendant de part et d'autre du volume de rangement (8), lesdites parois latérales (18) portant le dispositif de fixation séparable (16) de la partie avant (14) sur la partie arrière (12).

4. Dispositif de rangement selon la revendication 3, **caractérisé en ce que** le dispositif de fixation (16) comprend un élément d'encliquetage (22) saillant de chaque paroi latérale (18) dans le volume de rangement (8) et un rebord (24) s'étendant à partir de l'extrémité de chaque paroi latérale (18) vers la partie avant (14), l'élément d'encliquetage (22) et le rebord (24) d'une paroi latérale (18) étant agencés pour retenir entre eux un des bords latéraux (20) de la partie avant (14).

5. Dispositif de rangement selon la revendication 3, **caractérisé en ce que** le dispositif de fixation (16) est formé par au moins un organe frangible.

6. Dispositif de rangement selon la revendication 3, **caractérisé en ce que** le dispositif de fixation (16) comprend une charnière film (26) reliant la ligne de fond (28) de la partie arrière (12) à la partie avant (14), ladite charnière (26) étant agencée pour se rompre sous l'effet de la force externe supérieure à un seuil prédéterminé.

7. Dispositif de rangement selon la revendication 3, **caractérisé en ce que** le dispositif de fixation (16) est formé par au moins un organe d'engagement par friction.

8. Dispositif de rangement selon l'une quelconque des revendications 1 à 7, **caractérisé en ce que** la partie avant (14) est formée par une paroi sensiblement plane.

9. Dispositif de rangement selon l'une quelconque des revendications 1 à 8, **caractérisé en ce que** la partie avant (14) est formée par une pluralité de parois définissant une partie du volume de rangement (8) entre elles, la partie arrière définissant une autre partie du volume de rangement (8).

10. Planche de bord (1) de véhicule, comprenant un dispositif de rangement (6) selon l'une quelconque des revendications 1 à 9, ladite planche de bord (1) comprenant une façade (2) et une partie interne disposée en regard d'éléments structurels du véhicule automobile, le dispositif de rangement (6) étant agencé pour que sa partie arrière (12) s'étende du côté de la façade (2) et la partie avant (14) s'étende du côté de la partie interne, en regard des éléments structurels du véhicule.

## Patentansprüche

1. Stauvorrichtung (6) für ein Fahrzeug, mindestens ein Vorderteil (14) und ein Rückteil (12), die zwischen sich ein Stauvolumen (8) begrenzen, umfassend,
wobei das Vorderteil (14) und das Rückteil (12) durch eine trennbare Befestigungsvorrichtung (16) aneinander befestigt sind und die Befestigungsvorrichtung (16) ausgebildet ist, die Trennung des Vorderteils (14) von dem Rückteil (12) unter der Wirkung einer äußeren Kraft zu gestatten, die größer ist als eine vorgegebene Schwelle, derart, dass das Vorderteil (14) oder das Rückteil (12) von dem jeweils anderen Teil gelöst wird und in das Stauvolumen (8) unter der Wirkung der äußeren Kraft eindringt, **dadurch gekennzeichnet, dass** zwei Seitenwände (18) sich beidseitig des Stauvolumens (8) erstrecken und dass das Vorderteil (14) oder das Rückteil (12) in das Stauvolumen zwischen die Seitenwände (18) unter der Wirkung der äußeren Kraft ohne Zerstörung der Stauvorrichtung (6) eindringt.

2. Stauvorrichtung nach Anspruch 1, **dadurch gekennzeichnet, dass** die trennbare Befestigungsvorrichtung (16) ausgebildet ist, die Trennung des Vorderteils (14) von dem Rückteil (12) zu gestatten, wenn die äußere Kraft gemäß einer Richtung aufgebracht wird, die von dem Vorderteil (14) zu dem Stauvolumen (8) gerichtet ist, und das Vorderteil (14) mit dem Rückteil (12) verbunden zu halten, wenn die äußere Kraft gemäß einer Richtung aufgebracht wird, die vom Stauvolumen (8) zum Vorderteil (14) gerichtet ist.

3. Stauvorrichtung nach Anspruch 1 oder 2, **dadurch gekennzeichnet, dass** das Rückteil (12) zwei Seitenwände (18) umfasst, die sich beidseitig des Stauvolumens (8) erstrecken, wobei die Seitenwände (18) die von dem Vorderteil (18) trennbare Befestigungsvorrichtung (16) an dem Rückteil (12) tragen.

4. Stauvorrichtung nach Anspruch 3, **dadurch gekennzeichnet, dass** die Befestigungsvorrichtung (16) ein Rastelement (22), das von jeder Seitenwand (18) in das Stauvolumen (8) vorspringt, und einen Rand (24) umfasst, der sich von dem Ende jeder Seitenwand (18) zu dem Vorderteil (14) erstreckt, wobei das Rastelement (22) und der Rand (24) einer Seitenwand (18) ausgebildet sind, zwischen sich einen der Seitenränder (20) des Vorderteils (14) zu halten.

5. Stauvorrichtung nach Anspruch 3, **dadurch gekennzeichnet, dass** die Befestigungsvorrichtung (16) durch mindestens ein zerbrechliches Element gebildet ist.

6. Stauvorrichtung nach Anspruch 3, **dadurch gekennzeichnet, dass** die Befestigungsvorrichtung (16) ein Filmscharnier (26) umfasst, das die Grundlinie (28) des Rückteils (12) mit dem Vorderteil (14) verbindet, wobei das Scharnier (26) ausgebildet ist, unter der Wirkung der äußeren Kraft, die größer ist als eine vorgegebene Schwelle, zu brechen.

7. Stauvorrichtung nach Anspruch 3, **dadurch gekennzeichnet, dass** die Befestigungsvorrichtung (16) durch mindestens ein Reibeingriffselement gebildet wird.

8. Stauvorrichtung nach einem beliebigen der Ansprüche 1 bis 7, **dadurch gekennzeichnet, dass** das Vorderteil (14) durch eine im Wesentlichen ebene Wand gebildet wird.

9. Stauvorrichtung nach einem beliebigen der Ansprüche 1 bis 8, **dadurch gekennzeichnet, dass** das Vorderteil (14) durch eine Mehrzahl von Wänden gebildet wird, die einen Teil des Stauvolumens (8) zwischen sich begrenzen, wobei das Rückteil einen anderen Teil des Stauvolumens (8) begrenzt.

10. Instrumententafel (1) für ein Fahrzeug, die eine Stauvorrichtung (6) nach einem beliebigen der Ansprüche 1 bis 9 umfasst, wobei die Instrumententafel (1) eine Frontwand (2) und einen Innenbereich umfasst, der gegenüberstehend zu Strukturelementen des Kraftfahrzeugs angeordnet ist, wobei die Stauvorrichtung (6) derart ausgebildet ist, dass ihr Rückteil (12) sich zu der Frontwand (2) erstreckt und das Vorderteil (14) sich zu dem Innenbereich gegenüber den Strukturelementen des Fahrzeugs erstreckt.

## Claims

1. A vehicle storage device (6) comprising at least one front portion (14) and one rear portion (12) defining between them a storage space (8), the front portion (14) and the rear portion (12) being attached to each other by a separable attachment device (16), said attachment device (16) being arranged so as to allow separation of said front portion (14) from said rear portion (12) under the effect of an external force greater than a predetermined threshold, so that the front portion (14) or the rear portion (12) is detached from the other portion and penetrates into the storage space (8) under the effect of said external force, **characterized in that** two side walls (18) extends on either side of the storage space (8), and **in that** the front portion (14) or the rear portion (12) penetrates in the storage space (8) between the side walls (18) under the effect of said external force without destruction of the storage device (6).

2. The storage device according to claim 1, **characterized in that** the separable attachment device (16) is arranged so as to allow separation of the front portion (14) from the rear portion (12) when the external force is applied along a direction from the front portion (14) towards the storage space (8) and for maintaining the front portion (14) firmly attached to the rear portion (12) when the external force is applied along a direction from the storage space (8) to the front portion (14).

3. The storage device according to claim 1 or 2, **characterized in that** the rear portion (12) comprises two side walls (18) extending on either side of the storage space (8), said side walls (18) bearing the separable attachement device (16) for attaching the front portion (14) on the rear portion (12).

4. The storage device according to claim 3, **characterized in that** the attachment device (16) comprises a snap-on fastening element (22) protruding from each side wall (18) in the storage space (8) and an edge (24) extending from the end of each side wall (18) towards the front portion (14), the snap-on fastening element (22) and the edge (24) of a side wall (18) being arranged so as to retain between them one of the side edges (20) of the front portion (14).

5. The storage device according to claim 3 **characterized in that** the attachment device (16) is formed by at least one frangible member.

6. The storage device according to claim 3, **characterized in that** the attachment device (16) comprises a film hinge (26) connecting the bottom line (28) of the rear portion (12) to the front portion (14), said hinge (26) being arranged so as to break under the effect of the external force greater than a predetermined threshold.

7. The storage device according to claim 3, **characterized in that** the attachment device (16) is formed by at least one frictional engagement member.

8. The storage device according to any of claims 1 to 7, **characterized in that** the front portion (14) is formed by a substantially planar wall.

9. The storage device according to any of claims 1 to 8, **characterized in that** the front portion (14) is formed by a plurality of walls defining a portion of the storage space (8) between them, the rear portion defining another portion of the storage space (8).

10. A vehicle dashboard (1) comprising a storage device (6) according to any of claims 1 to 9, said dashboard (1) comprising a frontage (2) and an internal portion positioned facing structural elements of the motor vehicle, the storage device (6) being arranged so that its rear portion (12) extends on the side of the frontage (2) and the front portion (14) extends on the side of the internal portion, facing the structural elements of the vehicle.
